# EUROPÄISCHE PATENTSCHRIFT

(11) **EP 3 167 539 B1**
(45) Veröffentlichungstag und Bekanntmachung des Hinweises auf die Patenterteilung: **16.01.2019**
(21) Anmeldenummer: 15729403.4
(22) Anmeldetag: 09.06.2015
(51) Int. Cl.: H02K 5/173, H02K 5/22, H02K 11/21, B60G 21/055, H02K 11/215, H02K 11/33

(54) **ELEKTROMECHANISCHER STELLANTRIEB**
ELECTROMECHANICAL ACTUATOR
ACTIONNEUR ÉLECTROMÉCANIQUE

(30) Priorität: 09.07.2014 DE 102014213324
(43) Veröffentlichungstag der Anmeldung: 17.05.2017
(73) Patentinhaber: ZF Friedrichshafen AG, 88046 Friedrichshafen (DE)
(72) Erfinder: PFEIFFER, Daniel, 88276 Berg (DE); HOFFMANN, Martin, 88048 Friedrichshafen (DE)
(86) Internationale Anmeldenummer: PCT/EP2015/062798
(87) Internationale Veröffentlichungsnummer: WO 2016/005126

(56) Entgegenhaltungen:
- EP-A1- 2 062 757
- DE-A1-102011 002 007
- DE-C1- 19 850 169
- DE-U1-202008 002 796

## Beschreibung

Die Erfindung betrifft einen elektromechanischen Stellantrieb für einen aktiven Wankstabilisator eines Kraftfahrzeugs, welcher einen Elektromotor mit einer Rotorwelle und einem Motorgehäuse, ein im Motorgehäuse abgestütztes Lagerschild zur Lagerung der Rotorwelle sowie einen stirnseitig zum Motorgehäuse und zum Lagerschild angeordneten, mit einer ersten Stabilisatorhälfte verbundenen Deckel umfasst, wobei der Stellantrieb zusätzlich zu dem Elektromotor ein Planetengetriebe mit einem Abtrieb umfasst, an welchem eine zweite Stabilisatorhälfte befestigt ist.

Durch die EP 1 820 675 A1 der Anmelderin wurde ein elektromechanischer Stellantrieb, auch Schwenkmotor genannt, für eine Stabilisatoranordnung bekannt. Der Schwenkmotor umfasst einen Elektromotor und ein stark untersetzendes Planetengetriebe, welche in einem gemeinsamen Gehäuse, dem Motorgehäuse, aufgenommen sind. Eine erste Stabilisatorhälfte ist über eine Auftulpung mittels einer Schweißverbindung stirnseitig mit dem Motorgehäuse verbunden, während eine zweite Stabilisatorhälfte mit dem Abtrieb des Planetengetriebes verbunden ist. Durch Aktivierung des Elektromotors, d. h. Verdrehen der Rotorwelle können beide Stabilisatorhälften gegeneinander verdreht werden, wodurch eine aktive Wankstabilisierung für das Kraftfahrzeug erreicht wird.

In der älteren Anmeldung der Anmelderin mit dem Aktenzeichen 10 2013 215 859.9 ist ein elektromechanischer Stellantrieb eines aktiven Wankstabilisators für Kraftfahrzeuge offenbart, wobei insbesondere der Anschluss eines Kabelstranges für die Leistungs- und Signalübertragung für den Elektromotor und eine Sensoreinheit dargestellt und beschrieben ist. Dabei wird der Kabelstrang über einen stirnseitig an einem Deckel befestigten ersten Stecker an den Elektromotor und über einen ortsfesten zweiten Stecker an das fahrzeugseitige Bordnetz angeschlossen.

DE 198 50 169 C1 offenbart einen elektromechanischen Stellantrieb für einen aktiven Wankstabilisator mit beiderseitigem Abtrieb und Planetengetriebe.

Es ist Aufgabe der vorliegenden Erfindung, einen elektromechanischen Stellantrieb der eingangs genannten Art weiter zu verbessern, wobei insbesondere die für den Betrieb eines Kraftfahrzeuges geltenden Anforderungen wie z. B. Staub- und Wasserdichtigkeit zu erfüllen sind.

Die Aufgabe der Erfindung wird durch die Merkmale des Patentanspruches 1 gelöst. Vorteilhafte Ausgestaltungen ergeben sich aus den Unteransprüchen.

Erfindungsgemäß ist vorgesehen, dass auf dem Lagerschild ein Komponententräger für elektrische und/oder elektronische Komponenten angeordnet und befestigt ist. Der Komponententräger, der sich in einem geschlossenen, nach außen abgedichteten Raum zwischen Lagerschild und Deckel befindet, dient der Aufnahme, der Befestigung, Fixierung und Zentrierung von diversen Komponenten, welche für den Betrieb und die Steuerung des Elektromotors, insbesondere eine Wankstabilisierung erforderlich sind. Durch die Verwendung des Komponententrägers ergeben sich insbesondere Vorteile bei der Montage und dem Anschluss der einzelnen Komponenten, d. h. eine vereinfachte, schnellere und sichere Montage bis hin zur Blindmontage. Darüber hinaus ergibt sich der Vorteil der genauen Positionierung der einzelnen Komponenten einerseits zueinander und andererseits in Bezug auf den elektromechanischen Stellantrieb.

Nach einer bevorzugten Ausführungsform ist eine erste Komponente als Leistungsstecker ausgebildet, über welchen der Elektromotor mit elektrischer Leistung versorgt wird. Durch den Komponententräger wird sichergestellt, dass der Stecker einfach montierbar ist und über Steckkontakte eine sichere, störungsfreie Stromzufuhr zum Elektromotor erfolgt.

Nach einer weiteren bevorzugten Ausführungsform ist eine zweite Komponente als Signalstecker ausgebildet, über welchen Signale, insbesondere Winkelpositionen zur Steuerung des Elektromotors übertragen werden.

Nach einer weiteren bevorzugten Ausführungsform ist eine dritte Komponente als Sensoreinheit ausgebildet, welche ein Geber- und ein Nehmerelement umfasst. Über die Sensoreinheit wird die Winkelposition der Rotorwelle gesteuert, d. h. der relative Verdrehwinkel zwischen den beiden Stabilisatorhälften.

Nach einer weiteren bevorzugten Ausführungsform ist eine vierte Komponente als Leiterplatte ausgebildet, welche als Träger für elektronische Bauteile und Leiterbahnen, d. h. elektrische Verbindungen der Bauteile dient. Die Leiterplatte hat im Wesentlichen die Funktion einer elektronischen Steuereinheit.

Nach einer weiteren bevorzugten Ausführungsform weist der Komponententräger eine erste koaxial zur Rotorwelle angeordnete Zentrierfläche auf, welche mit einer weiteren am Lagerschild angeordneten Zentrierfläche in Eingriff steht. Über diese erste Zentrierung ist der Komponententräger in Bezug auf die Rotationsachse der Rotorwelle zentriert.

Nach einer weiteren bevorzugten Ausführungsform weist der Komponententräger eine zweite exzentrisch, d. h. achsversetzt angeordnete Zentrierfläche auf, welche mit einer achsversetzt angeordneten Motorkontaktierung (Motoranschlusskontakten) in Eingriff steht und damit in Umfangsrichtung, d. h. gegen Verdrehen gesichert ist. Über die erste und die zweite Zentrierung ist der Komponententräger hinreichend gegenüber dem Lagerschild positioniert.

Nach einer weiteren bevorzugten Ausführungsform weist der Komponententräger einen ersten Steckerkragen auf, welcher der Aufnahme des Leistungssteckers bzw. der Steckerkontakte des Leistungssteckers dient. Der Steckerkragen stellt somit die "Steckdose" (female-Kontakt) zum Stecker (male-Kontakt) dar.

Nach einer weiteren bevorzugten Ausführungsform weist der Komponententräger einen zweiten Steckerkragen auf, welcher der Aufnahme des Signalsteckers dient. Der erste und der zweite Steckerkragen sind vorzugsweise um ca. 90 Grad in Umfangsrichtung versetzt auf dem Komponententräger angeordnet.

Nach einer weiteren bevorzugten Ausführungsform sind im ersten Steckerkragen Lamellenkontakte zur elektrischen Verbindung zwischen dem Leistungsstecker und den Motorkontakten, auch Leistungskontakte genannt, angeordnet. Die Lamellenkontakte bilden - wie oben erwähnt - die female-Kontakte, die elektrisch leitend, vorzugsweise durch eine Schweiß- oder Lötverbindung mit den Motorkontakten verbunden sind.

Nach einer weiteren bevorzugten Ausführungsform sind die Lamellenkontakte über ein stirnseitig angeordnetes Kunststoffelement gegenüber dem Lagerschild abgestützt. Dadurch wird die beim Einstecken des Leistungssteckers auftretende Steckkraft direkt in das Lagerschild eingeleitet, und die Motorkontakte, welche achsversetzt zu den Lamellenkontakten angeordnet sind, werden daher nicht durch die Steckkraft belastet.

Nach einer weiteren bevorzugten Ausführungsform weist der Deckel stirnseitig einen ersten Durchbruch für die Aufnahme des Leistungssteckers und des ersten Steckerkragens auf. Der Durchbruch weist unterschiedliche jeweils an den ersten Steckerkragen und den Leistungsstecker angepasste, d. h. gestufte Querschnitte auf.

Nach einer weiteren bevorzugten Ausführungsform weist der Deckel stirnseitig - in Umfangsrichtung versetzt zum ersten Durchbruch - einen zweiten Durchbruch zur Aufnahme des zweiten Steckerkragens und des Signalsteckers auf. Beide von außen in die Durchbrüche eingeführten Stecker, der Leistungs- und der Signalstecker, sind gegenüber dem Deckel abgedichtet, sodass kein Schmutz, Feuchtigkeit oder Wasser von außen in den Bereich des Komponententrägers eindringen und die Elektronik beeinträchtigen kann. Der Stellantrieb ist somit wattauglich, d. h. ein Eindringen von Wasser bei Erreichen der Watgrenze für das Kraftfahrzeug wird verhindert.

Nach einer weiteren bevorzugten Ausführungsform ist das Geberelement mit der Rotorwelle, vorzugsweise mit deren Stirnseite verbunden und innerhalb der ersten Zentrierfläche des Komponententrägers angeordnet. Das Geberelement ist somit durch den Komponententräger hinreichend korrosionsgeschützt, insbesondere staub- und öldicht, gegenüber dem Motorraum abgedichtet, wobei optional auch eine zusätzliche Dichtung vorgesehen werden könnte.

Nach einer weiteren bevorzugten Ausführungsform ist das Nehmerelement koaxial zum Geberelement, d. h. zur Rotationsachse auf der Leiterplatte angeordnet und befestigt. Dabei kann ein definierter Luftspalt in axialer Richtung zwischen Geber- und Nehmerelement eingestellt werden.

Nach einer weiteren bevorzugten Ausführungsform ist der Komponententräger mit dem Lagerschild verschraubt. Damit bietet der Komponententräger den an ihm befestigten elektrischen und elektronischen Komponenten einen sicheren Halt und eine exakte Positionierung.

Nach einer weiteren bevorzugten Ausführungsform ist zwischen den Leistungskontakten und der Leiterplatte ein in axialer Richtung abragendes Schweißschutzschild am Komponententräger angeordnet. Dadurch wird ein Funkenflug beim Herstellen einer stoffschlüssigen Verbindung zwischen den Leistungskontakten und den Lamellenkontakten, insbesondere beim Verschweißen unterbunden. Die Leiterplatte und die auf ihr angeordneten elektronischen Bauteile und Leiterbahnen werden somit bei der Montage geschützt.

Nach einer weiteren bevorzugten Ausführungsform wird die Leiterplatte durch Heißverstemmen mit dem Komponententräger verbunden. Letzterer kann als Spritzgussteil aus Kunststoff oder Metall oder auch als Verbundteil hergestellt sein. Bei dem an sich bekannten Verfahren des Heißverstemmens wird das Kunststoffmaterial unter Einwirkung von Wärme geschmolzen, verformt und formschlüssig mit dem Gegenstück, hier der Leiterplatte verbunden. Vorteilhaft hierbei ist, dass keine zusätzlichen Befestigungselemente, z. B. Schrauben benötigt werden.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: einen Ausschnitt eines Stellantriebes mit Komponententräger und Leistungsstecker in einem Axialschnitt,
- Fig. 2: den Axialschnitt gemäß Fig. 1 mit Zentrierflächen,
- Fig. 3: eine Draufsicht des Komponententrägers mit Steckerkragen,
- Fig. 4: eine Explosivdarstellung des Stellantriebes mit Komponententräger und Deckel und
- Fig. 5: einen weiteren Axialschnitt mit Signalstecker.

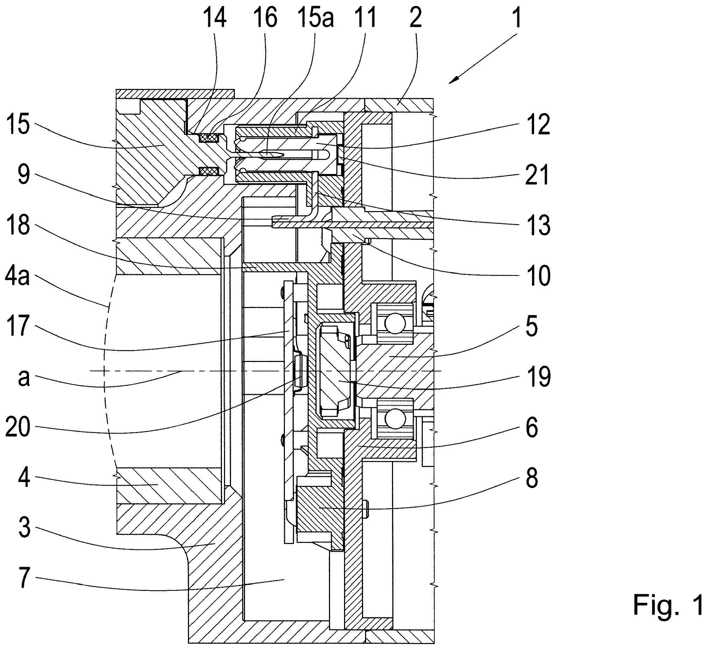

Fig. 1 zeigt die Stirnseite eines elektromechanischen Stellantriebes 1, ausgebildet als Schwenkmotor 1 einer aktiven Wankstabilisierung für Kraftfahrzeuge. Der Stellantrieb 1 umfasst ein Motorgehäuse 2, welches frontseitig durch einen Deckel 3, welcher vorzugsweise stoffschlüssig mit einer ersten Stabilisatorhälfte 4 verbunden ist, abgeschlossen ist. Das Motorgehäuse 2 ist stirnseitig mit dem Deckel 3 vorzugsweise stoffschlüssig verbunden, da im Betrieb der aktiven Wankstabilisierung Drehmomente vom Motorgehäuse 2 auf die Stabilisatorhälfte 4 übertragen werden. Wie aus dem eingangs genannten Stand der Technik bekannt, umfasst der Stellantrieb 1 zusätzlich zu dem Elektromotor ein Planetengetriebe mit einem Abtrieb, an welchem eine zweite Stabilisatorhälfte (nicht dargestellt) befestigt ist. Vom Elektromotor ist hier lediglich die Rotor- oder Motorwelle 5 dargestellt, deren Wellenstummel in einem Lagerschild 6 gelagert ist. Das Motorgehäuse 2 und die Stabilisatorhälfte 4 sind koaxial in Bezug auf die Rotationsachse a der Rotorwelle 5 angeordnet. Der Deckel 3 und das Lagerschild 6 begrenzen einen Hohlraum 7, auch Elektronikraum 7 genannt, in welchem ein Komponententräger 8 für diverse elektrische und elektronische Komponenten angeordnet ist. Der Hohlraum 7 ist einerseits nach außen (zur Atmosphäre) abgedichtet, wobei der als Rohr ausgebildete Stabilisator 4 nach außen abgeschlossen ist, was durch eine Dichtwand 4a gestrichelt angedeutet ist. Andererseits ist der Hohlraum 7 gegenüber dem Motorraum (ohne Bezugszahl) hinreichend abgedichtet. Der Elektromotor weist Motor- oder Leistungskontakte 9 auf, welche achsparallel durch das Lagerschild 6 hindurchgeführt und durch einen Isolationskörper 10 in dem Lagerschild 6 gehalten und abgedichtet sind. Der Komponententräger 8 weist einen ersten Steckerkragen 11 auf, in welchem Lamellenkontakte 12 (female-Kontakte) aufgenommen sind. Die Lamellenkontakte 12 sind über elektrische Leiter 13 elektrisch leitend, vorzugsweise durch eine stoffschlüssige Verbindung wie Schweißen oder Löten mit den Motor- oder Leistungskontakten 9 verbunden. Der Deckel 3 weist einen ersten Durchbruch 14 auf, in welchen ein Leistungsstecker 15 gesteckt ist. Der Leistungsstecker 15 weist Leistungskontakte 15a (male-Kontakte) auf, welche in die Lamellenkontakte 12 gesteckt sind und somit eine elektrisch leitende Steckverbindung zu den Motorkontakten 9 bilden. Der Leistungsstecker 15 ist durch Dichtelemente, vorzugsweise Pressrippen 16 gegenüber dem Deckel 3 abgedichtet und fixiert. Auf dem Komponententräger 8 ist eine Leiterplatte 17 angeordnet, deren Plattenebene senkrecht zur Rotationsachse a ausgerichtet ist. Die Leiterplatte 17 dient der Aufnahme von elektronischen Bauteilen und Leiterbahnen und ist vorzugsweise durch Heißverstemmen, d. h. ohne zusätzliche Befestigungselemente mit dem Komponententräger 8 verbunden. Der Komponententräger 8 weist ein achsparallel abragendes, zwischen den Motorkontakten 9 und der Leiterplatte 17 angeordnetes Schweißschutzschild 18 auf, welches beim Verschweißen der Motorkontakte 9 mit den Leitern 13 einen etwaigen Funkenflug und eine mögliche Beschädigung der Leiterplatte 17 verhindern soll. Die Rotorwelle 5 des Elektromotors weist stirnseitig ein Geberelement 19, ausgebildet als Gebermagnet 19, welcher drehfest mit der Rotorwelle 5 verbunden ist und somit innerhalb einer zylindrischen Ausnehmung des Komponententrägers 8 rotiert. Auf der Leiterplatte 17 ist ein Nehmerelement 20 befestigt und koaxial zum Geberelement 19 bzw. zur Rotationsachse a ausgerichtet. Das Geberelement 19 bildet in Verbindung mit dem Nehmerelement 20 eine Sensoreinheit zur Steuerung und Erfassung des Verdrehwinkels zwischen beiden Stabilisatorhälften. Zwischen den Lamellenkontakten 12 und dem Lagerschild 6 ist ein Kunststoffelement 21 angeordnet, welches eine auf die Lamellenkontakte 12 wirkende Steckkraft (beim Einstecken des Leistungssteckers 15) direkt auf das Lagerschild 6 überträgt. Dadurch werden die Motorkontakte 9, die achsparallel versetzt angeordnet sind, entlastet.

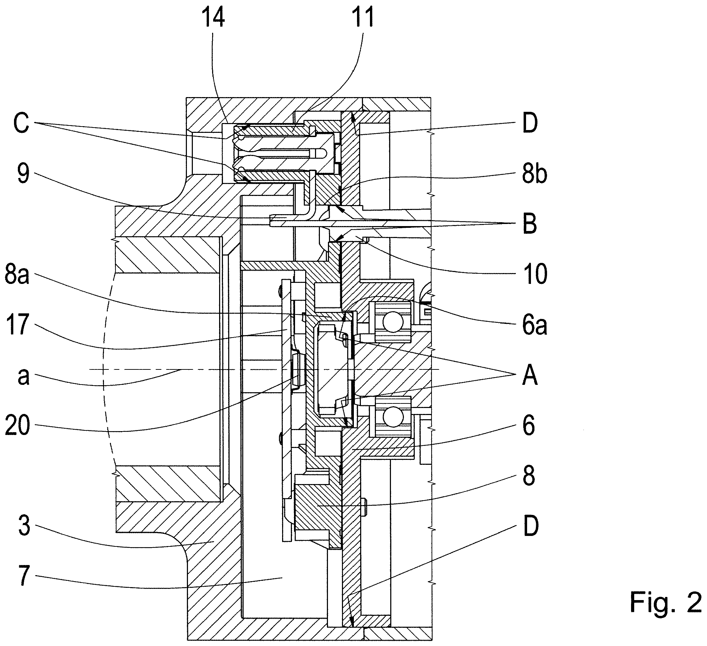

Fig. 2 zeigt den Axialschnitt, wie in Fig. 1 dargestellt, wobei in Fig. 2 die einzelnen Zentrierpaarungen mit großen Buchstaben A bis D bezeichnet sind. Der Komponententräger 8 ist gegenüber dem Lagerschild 6 über die mit A bezeichneten Flächen zentriert. Hierzu weist der Komponententräger 8 einen hohlzylindrischen Ansatz 8a (Zentrieransatz 8a) mit einer zylindrischen Außenfläche und das Lagerschild eine zylindrische Vertiefung 6a auf, in welche der Zentrieransatz 8a eingesetzt ist. Bedarfsweise kann hier zusätzlich eine geeignete Dichtung platziert werden, sodass der Elektronikraum 7 vollständig gegenüber dem Motorraum abgedichtet ist. Der Komponententräger 8 wird ferner an der mit B bezeichneten Stelle gegenüber dem Lagerschild 6 in Umfangsrichtung fixiert, womit eine Rotationszentrierung erreicht wird. Der Komponententräger 8 weist an dieser Stelle einen Durchbruch 8b auf, in welchen der Isolationskörper 10 hineinragt. Insofern ist der Komponententräger 8 auf die Motorkontakte 9 ausgerichtet. Diese Ausrichtung gilt analog für das an der Leiterplatte 17 befestigte Empfänger- oder Nehmerelement 20 bezüglich seiner Nulllage. An der mit C bezeichneten Stelle ist der Deckel 3 in Umfangsrichtung mit dem ersten Steckerkragen 11 des Komponententrägers 8 in Umfangsrichtung zentriert, wobei am Außenumfang des ersten Steckerkragens 11 Dichtelemente, bevorzugt als Pressrippen ausgebildet, zur Abdichtung gegenüber dem Durchbruch 14 vorgesehen sind. Die Zentrierung des Deckels 3 gegenüber dem Lagerschild 6 erfolgt über eine Passung zwischen dem Außendurchmesser des Lagerschilds 6 und dem Bohrungsdurchmesser des Deckels 3.

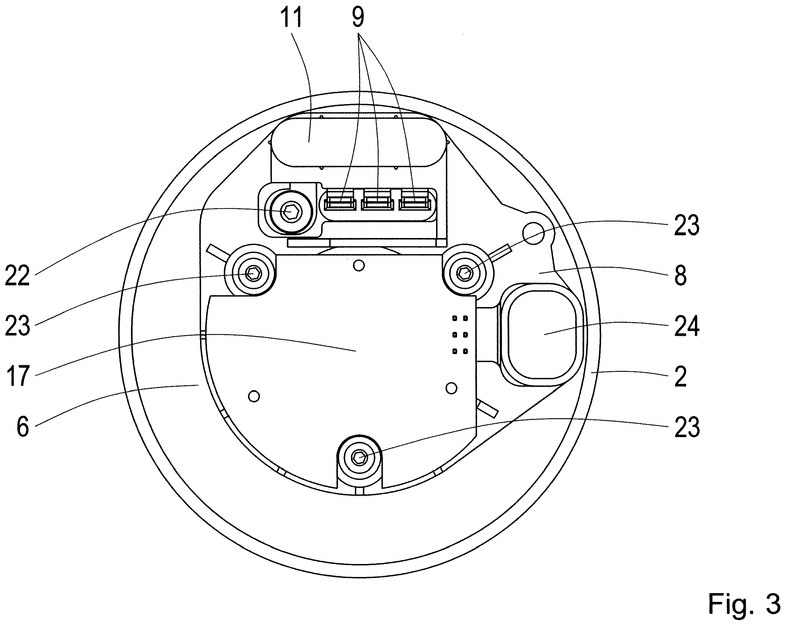

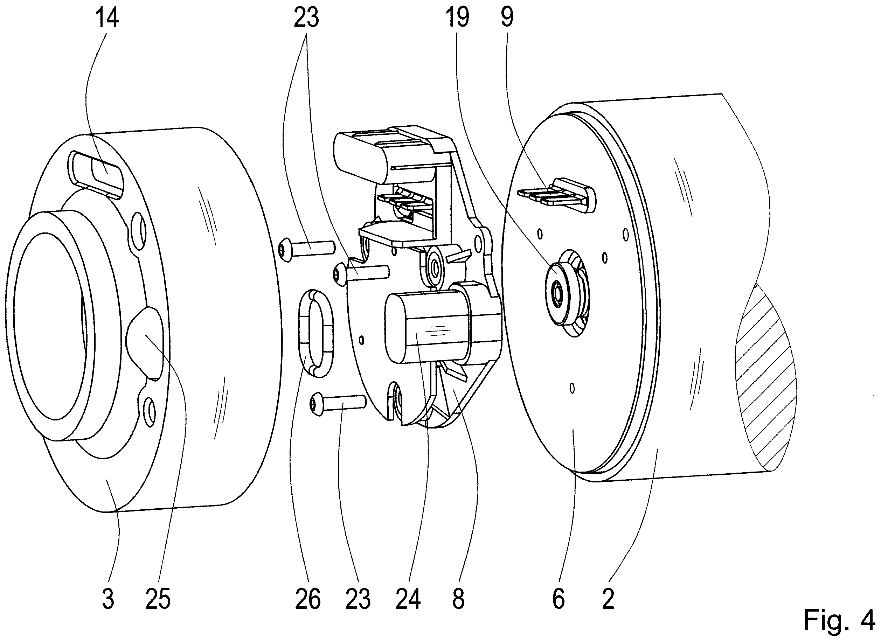

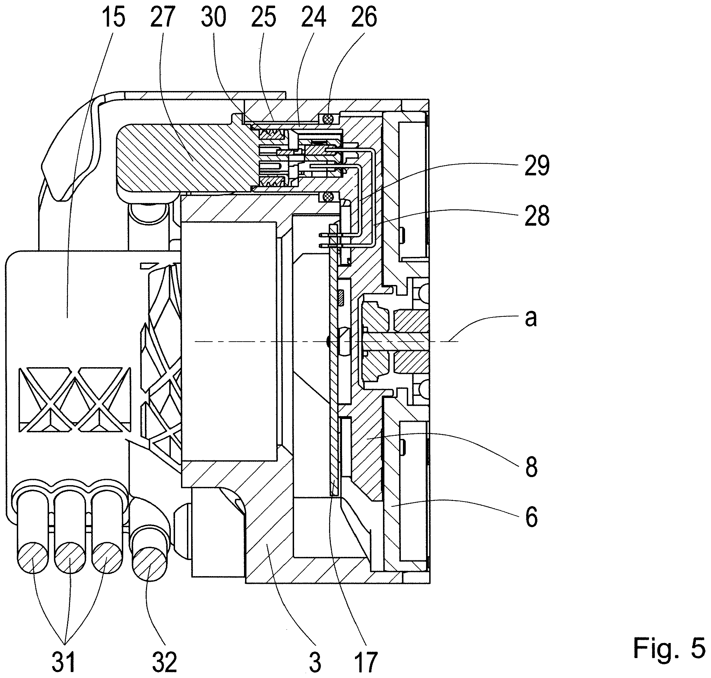

Fig. 3 zeigt eine Draufsicht - bei abgenommenem Deckel 3 - auf das Lagerschild 6, die Leiterplatte 17 und den Komponententräger 8. Der erste Steckerkragen 11 weist - wie die Darstellung zeigt - einen ovalen Querschnitt auf, welcher dem Querschnitt des Leistungssteckers 15 (Fig. 1) entspricht. In der Zeichnung unterhalb des Steckerkragens 11 sind die drei nebeneinander angeordneten Motorkontakte 9 erkennbar. In der Zeichnung links neben den Motorkontakten ist eine so genannte Masseschraube 22 angeordnet, welche elektrisch leitend mit dem Lagerschild 6 und damit mit dem Motorgehäuse 2 verbunden ist. Die Masseschraube 22 hat die Aufgabe, eine Abschirmung des Leistungskabels (nicht dargestellt) an Masse zu legen, d. h. mittels der Masseschraube 22 findet eine Schirmübergabe an Masse statt. Der Komponententräger 8 ist über drei Befestigungsschrauben 23 mit dem Lagerschild 6 verschraubt, d. h. fest verbunden. Auf dem Komponententräger 8 ist - parallel zur Zeichenebene und der Ebene des Lagerschildes 6 - die Leiterplatte 17 angeordnet, welche - wie erwähnt - vorzugsweise durch Heißverstemmen mit dem Komponententräger 8 verbunden ist. In Umfangsrichtung etwa um 90 Grad versetzt ist ein zweiter Steckerkragen 24 als integraler Bestandteil des Komponententrägers 8 angeordnet, wobei der im Querschnitt etwa rechteckförmig ausgebildete Steckerkragen 24 der Aufnahme eines zweiten hier nicht dargestellten Steckers, eines so genannten Signal- oder Sensorsteckers, dient - wie in Fig. 5 dargestellt. Fig. 4 zeigt eine Explosionsdarstellung des Motorgehäuses 2 mit Lagerschild 6, des Komponententrägers 8 sowie des Deckels 3, der zusätzlich zu dem ersten Durchbruch 14 einen zweiten Durchbruch 25 für den Signalstecker und den zweiten Steckerkragen 24 aufweist. Ein als O-Ring ausgebildetes Dichtelement 26 dient der Abdichtung des zweiten Steckerkragens 24 gegenüber dem zweiten Durchbruch 25, d. h. gegenüber dem Deckel 3. Die Befestigungsschrauben 23 werden durch den Komponententräger 8, d. h. durch entsprechende Schraubdome (ohne Bezugszahl) hindurch gesteckt und mit dem Lagerschild 6 verschraubt.

Fig. 5 zeigt einen Axialschnitt, welcher gegenüber der Zeichenebene in Fig. 1 um 90 Grad gedreht ist und einen zweiten Stecker, nämlich einen Signalstecker 27 zeigt, welcher in dem zweiten Steckerkragen 24 des Komponententrägers 8 gesteckt ist. Die Kontakte des Signalsteckers 27 (ohne Bezugszahl) sind über elektrische Leiter 28, 29 (Stanzgitter) mit der Leiterplatte 17 verbunden. Der Signalstecker 27 weist einen im zweiten Steckerkragen 24 angeordneten stirnseitigen Bereich auf, welcher über Dichtmittel, vorzugsweise Pressrippen 30 gegenüber dem Innenumfang des zweiten Steckerkragens 24 abgedichtet ist. Der zweite Steckerkragen 24 durchsetzt den zweiten Durchbruch 25 (s. auch Fig. 4) des Deckels 3 und ist gegenüber dem Durchbruch 25 über den O-Ring 26 (s. auch Fig. 4) abgedichtet. Somit kann keine Feuchtigkeit oder Wasser in den Elektronikraum 7 eindringen. Die Stabilisatorhälfte 4 (s. Fig. 1) ist hier weggelassen. Auf der Außen- und Stirnseite des Deckels 3 sind etwa in Umfangsrichtung verlaufenden Kabelzuführungen erkennbar, und zwar drei Leistungskabel 31 zum Leistungsstecker 15 und ein Signalkabel 32 zum Signalstecker 27. Die Kabelführung ist Gegenstand der eingangs genannten älteren Anmeldung der Anmelderin.

### Bezugszeichen

- 1: Stellantrieb
- 2: Motorgehäuse
- 3: Deckel
- 4: Stabilisatorhälfte
- 4a: Dichtwand
- 5: Rotorwelle
- 6: Lagerschild
- 6a: Vertiefung
- 7: Hohlraum
- 8: Komponententräger
- 8a: Zentrieransatz
- 8b: Durchbruch
- 9: Motorkontakte (Leistungskontakte)
- 10: Isolationskörper
- 11: erster Steckerkragen
- 12: Lamellenkontakte
- 13: elektrischer Leiter
- 14: erster Durchbruch (Deckel)
- 15: Leistungsstecker
- 15a: Leistungskontakte
- 16: Dichtelement
- 17: Leiterplatte
- 18: Schweißschutzschild
- 19: Geberelement
- 20: Nehmerelement
- 21: Kunststoffelement
- 22: Masseschraube
- 23: Befestigungsschraube
- 24: zweiter Steckerkragen
- 25: zweiter Durchbruch (Deckel)
- 26: O-Ring
- 27: Signalstecker
- 28: Leiter
- 29: Leiter
- 30: Pressrippen
- 31: Leistungskabel
- 32: Signalkabel

- a: Rotationsachse
- A: Zentrierung Komponententräger/Lagerschild
- B: Rotationszentrierung Komponententräger/Lagerschild
- C: Zentrierung Steckerkragen/Deckel
- D: Zentrierung Deckel/Lagerschild

## Patentansprüche

1. Elektromechanischer Stellantrieb (1) für einen aktiven Wankstabilisator eines Kraftfahrzeugs, umfassend einen Elektromotor mit einer Rotorwelle (5) und einem Motorgehäuse (2), ein im Motorgehäuse (2) abgestütztes Lagerschild (6) zur Lagerung der Rotorwelle (5), einen stirnseitig zum Motorgehäuse (2) und zum Lagerschild (6) angeordneten, mit einer ersten Stabilisatorhälfte (4) verbundenen Deckel (3), wobei der Stellantrieb (1) zusätzlich zu dem Elektromotor ein Planetengetriebe mit einem Abtrieb umfasst, an welchem eine zweite Stabilisatorhälfte befestigt ist, **dadurch gekennzeichnet, dass** auf dem Lagerschild (6) ein Komponententräger (8) für elektrische und/oder elektronische Komponenten angeordnet und befestigt ist.

2. Elektromechanischer Stellantrieb nach Anspruch 1, **dadurch gekennzeichnet, dass** eine erste Komponente als Leistungsstecker (15) für den Elektromotor auf dem Komponententräger ausgebildet ist.

3. Elektromechanischer Stellantrieb nach Anspruch 1 oder 2, **dadurch gekennzeichnet, dass** eine zweite Komponente als Signalstecker (27) auf dem Komponententräger ausgebildet ist.

4. Elektromechanischer Stellantrieb nach Anspruch 1, 2 oder 3, **dadurch gekennzeichnet, dass** eine dritte Komponente als ein Nehmerelement (20) umfassende Sensoreinheit auf dem Komponententräger ausgebildet ist.

5. Elektromechanischer Stellantrieb nach einem der Ansprüche 1 bis 4, **dadurch gekennzeichnet, dass** eine vierte Komponente als Leiterplatte (17) auf dem Komponententräger ausgebildet ist.

6. Elektromechanischer Stellantrieb nach einem der Ansprüche 1 bis 5, **dadurch gekennzeichnet, dass** der Komponententräger (8) eine erste konzentrisch zur Achse (a) der Rotorwelle (5) angeordnete Zentrierfläche (A) aufweist, welche mit einer weiteren Zentrierfläche des Lagerschilds (6) gefügt ist.

7. Elektromechanischer Stellantrieb nach einem der Ansprüche 1 bis 6, **dadurch gekennzeichnet, dass** der Komponententräger (8) eine bezüglich einer Rotationsachse (a) der Motorwelle (5) exzentrisch angeordnete Zentrierfläche (B) aufweist, dass am Lagerschild (6) Motor- oder Leistungskontakte (9) angeordnet sind und dass der Komponententräger (8) über die zweite Zentrierfläche (B) und die Motor- und/oder Leistungskontakte (9) in Umfangsrichtung fixiert ist.

8. Elektromechanischer Stellantrieb nach einem der Ansprüche 2 bis 7, **dadurch gekennzeichnet, dass** der Komponententräger (8) einen ersten Steckerkragen (11) zur Aufnahme eines Leistungssteckers (15) aufweist.

9. Elektromechanischer Stellantrieb nach einem der Ansprüche 3 bis 8, **dadurch gekennzeichnet, dass** der Komponententräger (8) einen zweiten Steckerkragen (24) zur Aufnahme eines Signalsteckers (27) aufweist.

10. Elektromechanischer Stellantrieb nach Anspruch 8 oder 9, **dadurch gekennzeichnet, dass** in einem Steckerkragen (11) Lamellenkontakte (12) zur elektrischen Verbindung zwischen dem Leistungsstecker (15) und den Motor- und/oder Leistungskontakten (9) angeordnet sind.

11. Elektromechanischer Stellantrieb nach Anspruch 10, **dadurch gekennzeichnet, dass** die Lamellenkontakte (12) über ein Kunststoffelement (21) gegenüber dem Lagerschild (6) abgestützt sind.

12. Elektromechanischer Stellantrieb nach einem der Ansprüche 8 bis 11, **dadurch gekennzeichnet, dass** der Deckel (3) einen ersten Durchbruch (14) zur Aufnahme des ersten Steckerkragens (11) und des Leistungssteckers (15) aufweist.

13. Elektromechanischer Stellantrieb nach einem der Ansprüche 9 bis 12, **dadurch gekennzeichnet, dass** der Deckel (3) einen zweiten Durchbruch (25) zur Aufnahme des zweiten Steckerkragens (24) und des Signalsteckers (27) aufweist.

14. Elektromechanischer Stellantrieb nach einem der Ansprüche 4 bis 13, **dadurch gekennzeichnet, dass** ein Geberelement (19) mit der Rotorwelle (5) verbunden und radial innerhalb einer Zentrierfläche (A) angeordnet ist.

15. Elektromechanischer Stellantrieb nach Anspruch 14, **dadurch gekennzeichnet, dass** das Nehmerelement (20) koaxial zu dem Geberelement (19) und auf der Leiterplatte (17) angeordnet und befestigt ist.

16. Elektromechanischer Stellantrieb nach einem der Ansprüche 1 bis 15, **dadurch gekennzeichnet, dass** der Komponententräger (8) mit dem Lagerschild (6) verschraubt ist.

17. Elektromechanischer Stellantrieb nach einem der Ansprüche 1 bis 16, **dadurch gekennzeichnet, dass** der Komponententräger (8) einen zwischen den Motor- und/oder Leistungskontakten (9) und der Leiterplatte (17) angeordneten Schweißschutzschild (18) aufweist.

18. Elektromechanischer Stellantrieb nach einem der Ansprüche 5 bis 17, **dadurch gekennzeichnet, dass** die Leiterplatte (17) durch Heißverstemmen mit dem Komponententräger (8) verbunden ist.

## Claims

1. Electromechanical actuator (1) for an active roll stabilizer of a motor vehicle, comprising an electric motor with a rotor shaft (5) and a motor housing (2), an end plate (6) which is supported in the motor housing (2) and has the purpose of supporting the rotor shaft (5), a cover (3) which is arranged at the end side with respect to the motor housing (2) and with respect to the end plate (6) and is connected to a first stabilizer half (4), wherein the actuator (1) comprises, in addition to the electric motor, a planetary gear mechanism with an output to which a second stabilizer half is attached, **characterized in that** a component carrier (8) for electric and/or electronic components is arranged on and attached to the end plate (6).

2. Electromechanical actuator according to Claim 1, **characterized in that** a first component is embodied as a power plug (15) for the electric motor on the component carrier.

3. Electromechanical actuator according to Claim 1 or 2, **characterized in that** a second component is embodied as a signal plug (27) on the component carrier.

4. Electromechanical actuator according to Claim 1, 2 or 3, **characterized in that** a third component is embodied as a sensor unit, comprising a slave element (20), on the component carrier.

5. Electromechanical actuator according to one of Claims 1 to 4, **characterized in that** a fourth component is embodied as a circuit board (17) on the component carrier.

6. Electromechanical actuator according to one of Claims 1 to 5, **characterized in that** the component carrier (8) has a first centring face (A) which is arranged concentrically with respect to the axis (a) of the rotor shaft (5) and is joined to a further centring face of the end plate (6).

7. Electromechanical actuator according to one of Claims 1 to 6, **characterized in that** the component carrier (8) has a centring face (B) which is arranged eccentrically with respect to a rotational axis (a) of the motor shaft (5), **in that** motor contacts (9) or power contacts (9) are arranged on the end plate (6), and **in that** the component carrier (8) is secured in the circumferential direction by means of the second centring face (B) and the motor contacts (9) and/or power contacts (9).

8. Electromechanical actuator according to one of Claims 2 to 7, **characterized in that** the component carrier (8) has a first plug collar (11) for receiving a power plug (15).

9. Electromechanical actuator according to one of Claims 3 to 8, **characterized in that** the component carrier (8) has a second plug collar (24) for receiving a signal plug (27).

10. Electromechanical actuator according to Claim 8 or 9, **characterized in that** laminated contacts (12) for forming electrical connections between the power plug (15) and the motor contacts (9) and/or power contacts (9) are arranged in a plug collar (11).

11. Electromechanical actuator according to Claim 10, **characterized in that** the laminated contacts (12) are supported with respect to the end plate (6) by means of a plastic element (21).

12. Electromechanical actuator according to one of Claims 8 to 11, **characterized in that** the cover (3) has a first breakthrough (14) for receiving the first plug collar (11) and the power plug (15) .

13. Electromechanical actuator according to one of Claims 9 to 12, **characterized in that** the cover (3) has a second breakthrough (25) for receiving the second plug collar (24) and the signal plug (27) .

14. Electromechanical actuator according to one of Claims 4 to 13, **characterized in that** a master element (19) is connected to the rotor shaft (5) and arranged radially within a centring face (A).

15. Electromechanical actuator according to Claim 14, **characterized in that** the slave element (20) is arranged on and attached to the circuit board (17), coaxially with respect to the master element (19) .

16. Electromechanical actuator according to one of Claims 1 to 15, **characterized in that** the component carrier (8) is screwed to the end plate (6) .

17. Electromechanical actuator according to one of Claims 1 to 16, **characterized in that** the component carrier (8) has a welding protection plate (18) which is arranged between the motor contacts (9) and/or power contacts (9) and the circuit board (17).

18. Electromechanical actuator according to one of Claims 5 to 17, **characterized in that** the circuit board (17) is connected to the component carrier (8) by hot caulking.

## Revendications

1. Entraînement électromécanique d'actionnement (1) pour un stabilisateur actif de roulis d'un véhicule automobile, comprenant
un moteur électrique doté d'un arbre de rotor (5) et d'un carter de moteur (2),
un bouclier de montage (6) soutenu sur le carter de moteur (2) pour monter l'arbre de rotor (5),
un couvercle (3) disposé frontalement par rapport au carter de moteur (2) et au bouclier de montage (6) et relié à une première moitié (4) de stabilisateur, l'entraînement d'actionnement (1) comprenant en plus du moteur électrique une transmission à planétaires dotée d'une sortie sur laquelle est fixée une deuxième moitié de stabilisateur,
**caractérisé en ce que**
un support (8) pour composants électriques et/ou électroniques est disposé et fixé sur le bouclier de montage (6).

2. Entraînement électromécanique d'actionnement selon la revendication 1, **caractérisé en ce qu'**un premier composant formé sur le support de composants est une fiche de puissance (15) du moteur électrique.

3. Entraînement électromécanique d'actionnement selon les revendications 1 ou 2, **caractérisé en ce qu'**un deuxième composant formé sur le support de composants est une fiche de signaux (27).

4. Entraînement électromécanique d'actionnement selon les revendications 1, 2 ou 3, **caractérisé en ce qu'**un troisième composant formé sur le support de composants est une unité de capteur comprenant un élément récepteur (20).

5. Entraînement électromécanique d'actionnement selon l'une des revendications 1 à 4, **caractérisé en ce qu'**un quatrième composant formé sur le support de composants est une carte de circuit (17).

6. Entraînement électromécanique d'actionnement selon l'une des revendications 1 à 5, **caractérisé en ce que** le support (8) de composants présente une première surface de centrage (A) disposée concentriquement par rapport à l'axe (a) du l'arbre de rotor (5) et jointe à une autre surface de centrage du bouclier de montage (6) .

7. Entraînement électromécanique d'actionnement selon l'une des revendications 1 à 6, **caractérisé en ce que** le support (8) de composants présente une surface de centrage (B) disposée en position décentrée par rapport à l'axe de rotation (a) du l'arbre de moteur (5), **en ce que** des contacts moteur et/ou de puissance (9) sont disposés sur le bouclier de montage (6) et **en ce que** le support (8) de composants est immobilisé dans la direction périphérique par l'intermédiaire de la surface de centrage (B) et des contacts moteur et/ou de puissance (9).

8. Entraînement électromécanique d'actionnement selon l'une des revendications 2 à 7, **caractérisé en ce que** le support (8) de composants présente un premier collet (11) de fiche qui reprend une fiche de puissance (15).

9. Entraînement électromécanique d'actionnement selon l'une des revendications 3 à 8, **caractérisé en ce que** le support (8) de composants présente un deuxième collet de fiche (24) qui reprend une fiche (27) de signaux.

10. Entraînement électromécanique d'actionnement selon les revendications 8 ou 9, **caractérisé en ce que** des contacts (12) en lamelle qui assurent la liaison électrique entre la fiche de puissance (15) et les contacts moteur et/ou de puissance (9) sont disposés dans un premier collet (11) de fiche.

11. Entraînement électromécanique d'actionnement selon la revendication 10, **caractérisé en ce que** les contacts (12) en lamelle sont soutenus sur le bouclier de montage (6) par l'intermédiaire d'un élément (21) en matière synthétique.

12. Entraînement électromécanique d'actionnement selon l'une des revendications 8 à 11, **caractérisé en ce que** le couvercle (3) présente une première perforation (14) qui reprend le premier collet (11) de fiche et la fiche de puissance (15).

13. Entraînement électromécanique d'actionnement selon l'une des revendications 9 à 12, **caractérisé en ce que** le couvercle (3) présente une deuxième perforation (25) qui reprend le deuxième collet de fiche (24) et la fiche (27) de signaux.

14. Entraînement électromécanique d'actionnement selon l'une des revendications 4 à 13, **caractérisé en ce qu'**un élément émetteur (19) est relié au l'arbre de rotor (5) et est disposé radialement à l'intérieur d'une surface de centrage (A).

15. Entraînement électromécanique d'actionnement selon la revendication 14, **caractérisé en ce que** l'aimant récepteur (20) est disposé et fixé coaxialement par rapport à l'élément émetteur (19) et sur la carte de circuit (17).

16. Entraînement électromécanique d'actionnement selon l'une des revendications 1 à 15, **caractérisé en ce que** le support (8) de composants est vissé sur le bouclier de montage (6).

17. Entraînement électromécanique d'actionnement selon l'une des revendications 1 à 16, **caractérisé en ce que** le support (8) de composants présente un blindage (18) de protection de soudage disposé entre les contacts moteur et/ou de puissance (9) et la carte de circuit (17) .

18. Entraînement électromécanique d'actionnement selon l'une des revendications 5 à 17 en ce que la carte de circuit (17) est reliée au support (8) de composants par montage à chaud.
